# FASCICULE DE BREVET EUROPEEN

(11) **EP 1 359 369 B1**
(45) Date de publication et mention de la délivrance du brevet: **10.05.2006**
(21) Numéro de dépôt: 03290917.8
(22) Date de dépôt: 11.04.2003
(51) Int. Cl.: F21S 8/10, B60Q 1/00

(54) **Dispositif d'éclairage et/ou de signalisation pour véhicules automobiles**
Beleuchtung- und/oder Signalisierungvorrichtung für Kraftfahrzeuge
Lighting and/or signaling device for automobiles

(30) Priorité: 02.05.2002 DE 10219738
(43) Date de publication de la demande: 05.11.2003
(73) Titulaire: VALEO Beleuchtung Deutschland GmbH, 74321 Bietigheim-Bissingen (DE)
(72) Inventeur: Purz, Matthias, Valeo Wischersysteme GmbH, 74321 Bietigheim-Bissingen (DE)
(74) Mandataire: Renous Chan, Véronique

(56) Documents cités:
- DE-A- 19 831 002
- US-A1- 2002 093 829

## Description

La présente invention concerne un dispositif d'éclairage et/ou signalisation pour véhicules automobiles et particulièrement un dispositif d'éclairage utilisable comme feu de véhicule automobile, avec au moins une source lumineuse et au moins un guide de lumière qui comprend une surface d'entrée de lumière pour la lumière transmise par la source lumineuse ainsi qu'une surface de sortie de lumière.

Un tel dispositif d'éclairage est connu d'après DE 41 29 094 A1. Les feux des véhicules automobiles servent essentiellement à rendre les contours du véhicule visibles même dans l'obscurité et à indiquer aux autres usagers de la route les intentions de déplacement du conducteur. De tels feux peuvent être par exemple des feux de position et de stationnement, des feux arrière, des feux indicateurs de direction ou des feux stop. Du fait de la réduction croissante de l'espace de montage disponible sur les véhicules modernes, on s'efforce de développer des feux aussi plats et donc peu encombrants que possible qui puissent aussi être montés dans des zones des véhicules dotées d'une faible épaisseur de montage.

DE 41 29 094 A1 décrit un feu de signalisation pour véhicules automobiles avec plusieurs diodes luminescentes servant de source lumineuse auxquelles sont associés des guides de lumière allongés. La lumière générée par les diodes luminescentes est transmise aux faces avant des guides de lumière disposés parallèlement les uns à côté des autres derrière une plaque d'obturation transparente. Sur une face opposée à une surface de sortie de lumière, les guides de lumière sont dotés de prismes qui dispersent les faisceaux lumineux entrants, grâce auxquels la lumière peut être transmise dans la direction de rayonnement souhaitée à partir du guide de lumière. Le feu de signalisation connu d'après ce document est certes plat et peu encombrant, mais la fabrication des guides de lumière dotés de prismes montés de leur côté opposé à la face de sortie de lumière est relativement complexe et coûteuse.

US 2002/093829 A1 décrit un feu de signalisation pour vehicules automobiles avec une diode luminescent et avec un guide de lumière. Les zones dispersives sont noyées dans le guide de lumiere.

La présente invention a pour objectif principal de proposer un dispositif d'éclairage et/ou de signalisation pour véhicules automobiles plat et peu encombrant qui soit plus simple et économique à fabriquer.

Cet objectif est atteint selon l'invention par un dispositif d'éclairage et/ou signalisation doté des caractéristiques de la revendication 1 et un procédé doté des caractéristiques de la revendication 10.

Le dispositif d'éclairage selon invention possède au moins une source lumineuse et un guide de lumière qui comprend une surface d'entrée de lumière pour la lumière transmise par la source lumineuse et une surface de sortie de lumière. Sur une surface du guide de lumière, notamment celle opposée à la surface de sortie de lumière sont imprimées des zones dispersives. La lumière injectée depuis la source lumineuse dans le guide de lumière transparent est totalement réfléchie à l'intérieur du guide de lumière et ainsi transmise de manière connue à travers le guide de lumière. Lorsque les faisceaux lumineux sur leur chemin à travers le guide de lumière rencontrent une des zones dispersives, ils sont dispersés et éliminés du guide de lumière au niveau de la surface de sortie de lumière. Par rapport au dispositif d'éclairage connu, le dispositif selon l'invention a l'avantage que le guide de lumière doté de zones dispersives imprimées est notablement plus simple et plus économique à fabriquer que le guide de lumière doté de prismes utilisé dans l'état de la technique. Etant donné que les zones dispersives imprimées peuvent en outre être très plates, l'encombrement du dispositif d'éclairage peut être notablement réduit par rapport au dispositif doté de prismes. Le dispositif d'éclairage selon l'invention peut servir de feu de contour latéral (ces feux de contour latéraux sont par exemple prescrits par la législation américaine), mais il peut aussi n'être prévu que pour des raisons d'esthétique, par exemple pour éclairer les zones plates d'un ensemble de feux arrière auxquelles aucune fonction particulière n'est affectée.

Les zones dispersives peuvent être réparties d'une manière quelconque à la surface du guide de lumière et avoir une forme quelconque. Par exemple, elles peuvent être disposées à la surface du guide de lumière en forme de dessin pointillé régulier ou irrégulier ou être réparties sous forme de zones régulières ou irrégulières à la surface du guide de lumière. Par une répartition appropriée des zones dispersives, le rapport entre la fraction de lumière totalement réfléchie et la fraction de lumière sortant du guide de lumière sur chaque section du guide de lumière peut être défini librement. Avec les zones dispersives imprimées utilisées dans le dispositif d'éclairage selon l'invention, la répartition désirée des zones est particulièrement facile à réaliser.

Le nombre, la taille et la répartition des zones à la surface du guide de lumière doivent cependant être choisis de telle manière que l'intensité de rayonnement sur la totalité de la surface de sortie de lumière est sensiblement homogène. On peut ainsi obtenir de manière simple un rayonnement lumineux homogène sur toute la surface de sortie de lumière du guide de lumière, même avec un guide de lumière de grande surface.

Pour obtenir un rayonnement lumineux homogène sur toute la surface de sortie de lumière du guide de lumière, il faut déjà que la lumière sorte des sections du guide de lumière voisines de la source lumineuse. Cependant, cela fait diminuer la quantité totale de lumière transmise par le guide de lumière lorsque la distance de la source lumineuse augmente, de sorte qu'on ne peut obtenir un rayonnement lumineux homogène sur toute la surface de sortie de lumière que si la fraction de lumière dispersée par rapport à la fraction de lumière totalement réfléchie augmente lorsque la distance de la source lumineuse augmente. C'est pourquoi la fraction de la surface totale du guide de lumière recouverte par les zones dispersives doit augmenter par rapport à la fraction de la surface totale du guide de lumière non recouverte de zones dispersives lorsque la distance de la source lumineuse augmente. De ce fait, la taille et/ou le nombre de zones dispersives sur la surface du guide de lumière augmentent de préférence lorsque la distance de la source lumineuse augmente.

Les zones dispersives peuvent être constituées d'une matrice colorée imprimable et de particules dispersives incluses dans la matrice. La couleur de la matrice influence en combinaison avec la couleur de la source lumineuse la couleur et l'efficacité du système global, de sorte que la matrice peut être harmonisée avec la couleur de la source lumineuse choisie selon la couleur souhaitée du système global. Dans la matrice, qui peut être par exemple une pâte pour impression, des particules à fort pouvoir de réflexion sont réparties arbitrairement. Les particules dispersives peuvent facilement être mélangées dans la matrice avant l'impression des zones dispersives. En faisant varier la taille des particules et la répartition dimensionnelle des particules incluses, on peut faire varier les propriétés de dispersion souhaitées des zones dispersives dans de larges zones. En utilisant des inclusions dotées d'une taille des particules appropriée et d'une répartition dimensionnelle des particules appropriée, on peut ainsi réaliser des zones dispersives dotées d'un fort effet dispersif et d'une très grande zone de dispersion avec un angle de dispersion atteignant 180°. On obtient ainsi un rayonnement lumineux très homogène avec le dispositif d'éclairage selon l'invention.

Les particules dispersives incluses dans la matrice peuvent être par exemple des particules d'oxyde de titane. Mais on peut aussi utiliser d'autres matériaux appropriés dotés de propriétés similaires.

La source lumineuse est de préférence une ou plusieurs diodes électroluminescentes. Selon la taille du guide de lumière utilisé et de la puissance lumineuse souhaitée du dispositif d'éclairage, on peut utiliser une ou plusieurs diodes electroluminescentes offrant différentes couleurs et caractéristiques de rayonnement. La diode peut comprendre par exemple un corps et une surface de sortie de lumière lenticulaire. Pour obtenir un rendement optimal de la lumière émise par la diode luminescente, la géométrie de la surface d'entrée de lumière du guide de lumière doit être de préférence adaptée à la géométrie de la surface de sortie de lumière et à l'angle de rayonnement de la diode luminescente.

La source lumineuse peut aussi être en forme de barre. Une telle disposition permet d'obtenir une entrée de lumière homogène sur la totalité de la surface d'entrée de lumière du guide de lumière.

Dans un mode de réalisation préféré du dispositif d'éclairage selon l'invention, le guide de lumière est en forme de panneau. Plusieurs diodes luminescentes ou une source lumineuse en forme de barre peuvent alors être disposées le long d'une face avant du panneau du guide de lumière disposé perpendiculairement à la surface de sortie de lumière. Un guide de lumière en forme de panneau peut facilement être imprimé avec des zones dispersives et est donc particulièrement facile et économique à fabriquer.

Le guide de lumière est de préférence courbé. De ce fait, le dispositif d'éclairage peut être adapté aux espaces de montage présents dans le véhicule de manière particulièrement propice.

Le guide de lumière peut prendre la forme d'un écran intermédiaire, d'un écran optique ou de la glace de fermeture du feu ou du projecteur. On peut aussi prévoir que l'on munit le feu ou le projecteur de deux guides de lumières traités selon l'invention.

La présente invention concerne en outre un procédé pour la fabrication d'un dispositif d'éclairage et/ou de signalisation pour véhicules automobiles avec lequel des zones dispersives sont imprimées sur une surface du guide de lumière opposée à la surface de sortie de lumière.

L'impression des zones dispersives sur la surface du guide de lumière se fait de préférence au moyen d'un procédé sérigraphique ou au moyen d'un procédé lithographique.

L'impression des zones dispersives peut aussi se faire par estampage à chaud d'un film sur la surface du guide de lumière.

Un exemple de mode de réalisation du dispositif d'éclairage selon l'invention est décrit ci-dessous à l'aide des schémas joints suivants :
- Fig. 1: vue en coupe d'un ensemble de feux arrière de véhicule avec un dispositif d'éclairage selon l'invention à l'état monté,
- Fig. 2: vue grossie du dispositif d'éclairage selon l'invention représenté sur la figure 1,
- Fig. 3: vue de dessus du dispositif d'éclairage selon l'invention, et
- Fig. 4: détail grossi d'une section du dispositif d'éclairage selon l'invention représenté sur la figure 3.

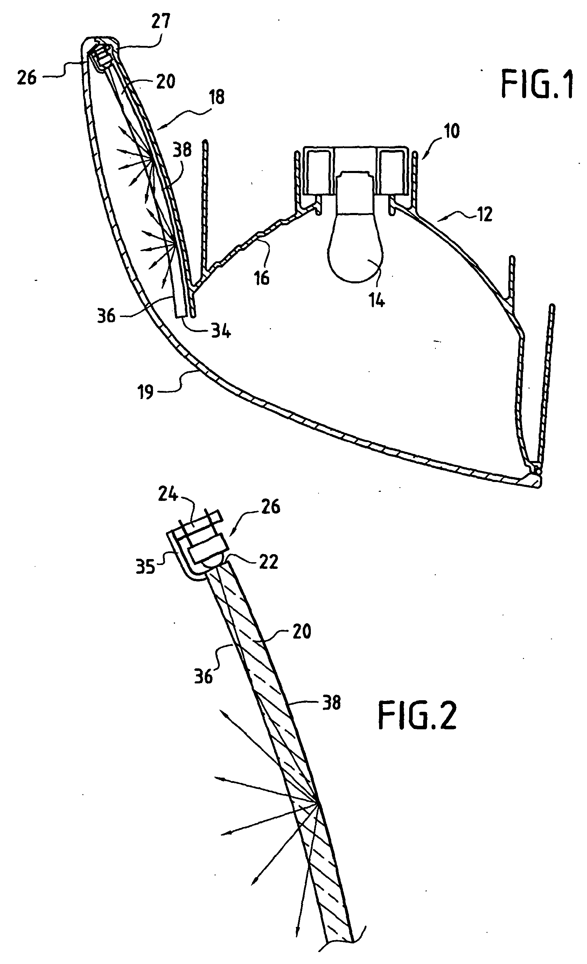

La figure 1 montre un ensemble de feux arrière de véhicule 10 qui comprend un feu arrière classique 12 avec une lampe à incandescence 14 et un réflecteur 16 ainsi qu'un feu de contour latéral 18 disposé à côté du feu stop 12. Une plaque d'obturation 19 s'étend aussi bien sur le feu stop 12 que sur le feu de contour latéral 18.

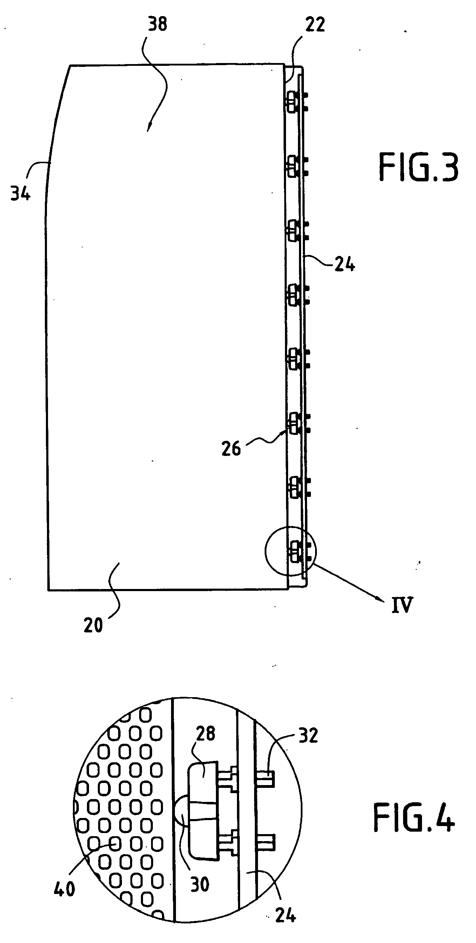

Comme le montrent très bien les figures 2 et 3, le feu de contour latéral 18 comprend un guide de lumière transparent courbé plat 20. Le long d'une face avant du guide de lumière faisant office de surface d'entrée de lumière 22 est disposée une plaque de support 24 qui, à l'état monté, est fixée dans un boîtier 27 du feu de contour latéral 18. Sur la plaque de support 24 sont fixées huit diodes luminescentes 26. Les diodes luminescentes 26 possèdent chacune un corps 28, une surface de sortie de lumière lenticulaire 30 ainsi que des éléments de connexion 32 pour relier les diodes luminescentes 26 avec une source d'énergie non représentée sur les figures. Du fait que les diodes luminescentes 26 sont disposées uniquement le long d'une surface 22 du guide de lumière 20, une surface 34 du guide de lumière 20 opposée à la surface d'entrée de lumière 22 est dotée d'une couche réfléchissante pour obtenir un rayonnement lumineux aussi homogène que possible et une plus grande efficacité du guide de lumière 20. Sur la plaque de support 24 est également fixé un écran 35 qui empêche l'irradiation de la lumière émise par les diodes luminescentes 26, de sorte que, lorsque l'ensemble de feux arrière du véhicule 10 est monté, on ne peut voir de l'extérieur que l'illumination produite par le guide de lumière 20.

Comme le montre le détail grossi sur la figure 4, un dessin pointillé constitué de zones dispersives 40 est imprimé sur une surface 38 du guide de lumière 20 opposée à une surface de sortie de lumière 36. Les zones dispersives 40 contiennent une matrice colorée imprimable dont la couleur est harmonisée avec la couleur et la puissance des diodes luminescentes 26 en fonction de la couleur souhaitée et de la puissance de rayonnement souhaitée du feu 18. Dans la matrice sont incluses de microscopiques particules d'oxyde de titane qui sont mélangées dans la matrice avant l'impression des zones dispersives 40.

Les zones dispersives 40 sont imprimées au moyen d'un procédé sérigraphique sur la surface 38 du guide de lumière 20. Dans des modes de réalisation alternatifs du feu 18, les zones dispersives 40 sont imprimées au moyen d'un procédé lithographique ou par estampage à chaud d'un film sur la surface 38 du guide de lumière 20.

La lumière transmise par les diodes luminescentes 26 au guide de lumière 20 via la surface d'entrée de lumière 22 est totalement réfléchie à l'intérieur du guide de lumière 20 et ainsi transmise de manière connue par le guide de lumière 20 (figure 2). Lorsqu'ils rencontrent une des zones dispersives 40, les faisceaux lumineux sont dispersés et éliminés du guide de lumière 20 au niveau de la surface de sortie de lumière 36 du guide de lumière 20.

La taille et le nombre des zones dispersives 40 sur la surface 38 du guide de lumière 20 augmentent lorsque la distance des diodes luminescentes 26 augmente. De ce fait, la fraction de la surface 38 du guide de lumière recouverte par les zones dispersives 40 augmente, ainsi que la fraction de la lumière dispersée par rapport à la fraction de la lumière totalement réfléchie. Ainsi, malgré la diminution de la quantité totale de la lumière transmise par le guide de lumière 20 avec l'augmentation de la distance des diodes luminescentes 26, on obtient une intensité de rayonnement sensiblement constante sur toute la surface de sortie de lumière 36 du guide de lumière 20.

On peut aussi prévoir une ou plusieurs zones cette fois ci non plus dispersives, c'est-à-dire diffusantes, mais également des zones réfléchissantes, soit sur le même guide de lumière, soit sur un autre guide de lumière incorporé dans le dispositif d'éclairage et/ou de signalisation.

L'invention concerne aussi le véhicule automobile équipé du dispositif d'éclairage et/ou signalisation du type feu décrit plus haut.

## Revendications

1. Dispositif d'éclairage et/ou signalisation (18) pour véhicules automobiles avec
- au moins une source lumineuse (26), et
- au moins un guide de lumière (20) qui comprend une surface d'entrée de lumière (22) pour la lumière transmise par la source lumineuse (26) et une surface de sortie de lumière (36),
**caractérisé par le fait que** sur une surface (38) du guide de lumière (20), notamment celle opposée à la surface de sortie de lumière (36) sont imprimées des zones dispersives (40).

2. Dispositif selon la revendication 1
**caractérisé par le fait que** le nombre, la taille et la répartition des zones dispersives (40) sur la surface (38) du guide de lumière (20) sont choisis de telle manière que l'intensité de rayonnement sur la totalité de la surface de sortie de lumière (36) est au moins sensiblement homogène.

3. Dispositif selon la revendication 2
**caractérisé par le fait que** la taille et/ou le nombre des zones dispersives (40) sur la surface (38) du guide de lumière (20) augmentent lorsque la distance de la source lumineuse (26) augmente.

4. Dispositif selon une des revendications 1 à 3
**caractérisé par le fait que** les zones dispersives (40) comportent une matrice colorée imprimable et des particules dispersives incluses dans ladite matrice.

5. Dispositif selon la revendication 4
**caractérisé par le fait que** les particules dispersives incluses comprennent des particules d'oxyde de titane.

6. Dispositif selon une des revendications 1 à 5
**caractérisé par le fait que** la source lumineuse (26) est une diode electroluminescente.

7. Dispositif selon une des revendications 1 à 5
**caractérisé par le fait que** la source lumineuse (26) est en forme de barre.

8. Dispositif selon une des revendications 1 à 7
**caractérisé par le fait que** le guide de lumière (20) est en forme de panneau.

9. Dispositif selon une des revendications 1 à 8
**caractérisé par le fait que** le guide de lumière (20) est courbé.

10. Dispositif selon l'une des revendications précédentes **caractérisé en ce que** le guide de lumière (20) est un écran intermédiaire ou une glace de fermeture dudit dispositif.

11. Procédé pour la fabrication d'un dispositif d'éclairage et /ou signalisation (18) pour véhicules automobiles comprenant les étapes de
- fourniture d'au moins une source lumineuse (26), et
- fourniture d'au moins un guide de lumière (20) qui comprend une surface d'entrée de lumière (22) pour la lumière transmise par la source lumineuse (26) et une surface de sortie de lumière (36),
**caractérisé par le fait que** l'impression de zones dispersives (40) sur une surface (38) du guide de lumière (20) opposée à la surface de sortie de lumière (36).

12. Procédé selon la revendication 11
**caractérisé par le fait que** l'impression des zones dispersives (40) sur la surface (38) du guide de lumière (20) se fait au moyen d'un procédé sérigraphique ou au moyen d'un procédé lithographique.

13. Procédé selon la revendication 11
**caractérisé par le fait que** l'impression des zones dispersives (40) se fait par estampage à chaud d'un film sur la surface (38) du guide de lumière (20).

14. Véhicule automobile équipé du dispositif d'éclairage et/ou signalisation du type feu selon l'une des revendications 1 à 10.

## Patentansprüche

1. Beleuchtungs- und/oder Signaleinrichtung (18) für Kraftfahrzeuge, mit
- mindestens einer Lichtquelle (26) und
- mindestens einem Lichtleiter (20), der eine Lichteintrittsfläche (22) für das von der Lichtquelle (26) abgegebene Licht und eine Lichtaustrittsfläche (36) umfasst,
**dadurch gekennzeichnet, dass** auf einer insbesondere der Lichtaustrittsfläche (36) gegenüberliegenden Fläche (38) des Lichtleiters (20) lichtstreuende Bereiche (40) aufgedruckt sind.

2. Einrichtung nach Anspruch 1,
**dadurch gekennzeichnet, dass** die Anzahl, die Größe und die Verteilung der lichtstreuenden Bereiche (40) auf der Fläche (38) des Lichtleiters (20) so gewählt sind, dass die Abstrahlungsintensität auf der gesamten Lichtaustrittsfläche (36) zumindest annähernd gleich ist.

3. Einrichtung nach Anspruch 2,
**dadurch gekennzeichnet, dass** die Größe und/oder die Anzahl der lichtstreuenden Bereiche (40) auf der Fläche (38) des Lichtleiters (20) mit zunehmender Entfernung von der Lichtquelle (26) zunehmen.

4. Einrichtung nach einem der Ansprüche 1 bis 3,
**dadurch gekennzeichnet, dass** die lichtstreuenden Bereiche (40) aus einem druckfähigen, gefärbten Grundmaterial und in das Grundmaterial eingelagerten, lichtstreuenden Partikeln bestehen.

5. Einrichtung nach Anspruch 4,
**dadurch gekennzeichnet, dass** die eingelagerten, lichtstreuenden Partikel Titanoxidpartikel sind.

6. Einrichtung nach einem der Ansprüche 1 bis 5,
**dadurch gekennzeichnet, dass** die Lichtquelle (26) eine Leuchtdiode ist.

7. Einrichtung nach einem der Ansprüche 1 bis 5,
**dadurch gekennzeichnet, dass** die Lichtquelle (26) stabförmig ausgebildet ist.

8. Einrichtung nach einem der Ansprüche 1 bis 7,
**dadurch gekennzeichnet, dass** der Lichtleiter (20) plattenförmig ausgebildet ist.

9. Einrichtung nach einem der Ansprüche 1 bis 8,
**dadurch gekennzeichnet, dass** der Lichtleiter (20) gekrümmt ist.

10. Einrichtung nach einem der vorhergehenden Ansprüche,
**dadurch gekennzeichnet, dass** der Lichtleiter (20) ein Zwischenschirm oder eine Abschlussscheibe der Einrichtung ist.

11. Verfahren zur Herstellung einer Beleuchtungs- und/oder Signaleinrichtung (18) für Kraftfahrzeuge, mit den Schritten
- Bereitstellen mindestens einer Lichtquelle (26) und
- Bereitstellen mindestens eines Lichtleiters (20), der eine Lichteintrittsfläche (22) für das von der Lichtquelle (26) abgegebene Licht und eine Lichtaustrittsfläche (36) umfasst,
**gekennzeichnet durch** das Aufdrucken lichtstreuender Bereiche (40) auf eine der Lichtaustrittsfläche (36) gegenüberliegende Fläche (38) des Lichtleiters (20).

12. Verfahren nach Anspruch 11,
**dadurch gekennzeichnet, dass** das Aufdrucken der lichtstreuenden Bereiche (40) auf die Fläche (38) des Lichtleiters (20) mittels eines Siebdruckverfahrens oder mittels eines lithographischen Druckverfahrens erfolgt.

13. Verfahren nach Anspruch 11,
**dadurch gekennzeichnet, dass** das Aufdrucken der lichtstreuende Bereiche (40) durch Heißprägen einer Folie auf die Fläche (38) des Lichtleiters (20) erfolgt.

14. Kraftfahrzeug, ausgestattet mit einer Beleuchtungs- und/oder Signaleinrichtung in der Art einer Leuchte nach einem der Ansprüche 1 bis 10.

## Claims

1. Lighting and/or signalling device (18) for motor vehicles with
- at least one light source (26), and
- at least one light guide (20) which comprises a light entry surface (22) for the light transmitted by the light source (26) and a light exit surface (36),
**characterised by** the fact that, on a surface (28) of the light guide (20), in particular the one opposite to the light exit surface (36), dispersive zones (40) are printed.

2. Device according to claim 1, **characterised by** the fact that the number, size and distribution of the dispersive zones (40) on the surface (38) of the light guide (20) are chosen so that the intensity of radiation on the entire light exit surface (36) is at least substantially homogeneous.

3. Device according to claim 2, **characterised by** the fact that the size and/or number of the dispersive zones (40) on the surface (38) of the light guide (20) increases when the distance from the light source (26) increases.

4. Device according to one of claims 1 to 3, **characterised by** the fact that the dispersive zones (40) comprise a printable coloured matrix and dispersive particles included in the said matrix.

5. Device according to claim 4, **characterised by** the fact that the dispersive particles included comprise particles of titanium oxide.

6. Device according to one of claims 1 to 5, **characterised by** the fact that the light source (26) is a light emitting diode.

7. Device according to one of claims 1 to 5, **characterised by** the fact that the light source (26) is in the form of a bar.

8. Device according to one of claims 1 to 7, **characterised by** the fact that the light guide (20) is in the form of a panel.

9. Device according to one of claims 1 to 8, **characterised by** the fact that the light guide (20) is curved.

10. Device according to one of the preceding claims, **characterised in that** the light guide (20) is an intermediate screen or a closure glass for the said device.

11. Method for manufacturing a lighting and/or signalling device (18) for motor vehicles, comprising the steps of
- providing at least one light source (26), and
- providing at least one light guide (20) which comprises a light entry surface (22) for the light transmitted by the light source (26) and a light exit surface (36),
**characterised by** the fact that the printing of dispersive zones (40) is on a surface (38) of the light guide (20) opposite to the light exit surface (36).

12. Method according to claim 11, **characterised by** the fact that the printing of the dispersive zones (40) on the surface (38) of the light guide (20) is effected by means of a screen printing process or by means of a lithographic process.

13. Method according to claim 11, **characterised by** the fact that the printing of the dispersive zones (40) is effected by hot stamping of a film on the surface (38) of the light guide (20).

14. Motor vehicle equipped with the lighting and/or signalling device of the sidelight type according to one of claims 1 to 10.
